(19) Europäisches Patentamt
European Patent Office
Office européen des brevets

(11) **EP 2 139 100 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(51) Int Cl.:
*H02K 29/03* (2006.01)    *H02K 1/27* (2006.01)
*H02K 21/16* (2006.01)

(21) Anmeldenummer: **08011716.1**

(22) Anmeldetag: **27.06.2008**

(54) **Permanentmagneterregte Synchronmaschine mit reduzierter Drehmomentenwelligkeit**

Permanent magnet synchronous machine with reduced cogging torque

Machine synchrone à aimants permanents dotée d'une ondulation de couple réduite

(84) Benannte Vertragsstaaten:
**DE FR**

(43) Veröffentlichungstag der Anmeldung:
**30.12.2009 Patentblatt 2009/53**

(73) Patentinhaber: **Siemens Aktiengesellschaft**
**80333 München (DE)**

(72) Erfinder:
• **Grossmann, Udo**
**97640 Oberstreu (DE)**
• **Vollmer, Rolf**
**36129 Gersfeld (DE)**
• **Zastrow, Michael**
**97616 Salz (DE)**

(56) Entgegenhaltungen:
**EP-A- 1 389 821        WO-A-91/16754**
**WO-A-2004/109894    WO-A-2006/029990**
**DE-A1- 10 348 401    DE-A1-102005 022 548**
**US-A1- 2006 290 220**

• **NICOLA BIANCHI ET AL: "Design Techniques for Reducing the Cogging Torque in Surface-Mounted PM Motors" IEEE TRANSACTIONS ON INDUSTRY APPLICATIONS, IEEE SERVICE CENTER, PISCATAWAY, NJ, US, Bd. 38, Nr. 5, 1. September 2002 (2002-09-01), XP011073515 ISSN: 0093-9994**

**Beschreibung**

Die vorliegende Erfindung betrifft eine permanentmagneterregte Synchronmaschine, die für einen Dreiphasen-Betrieb ausgelegt ist. Sie weist einen Ständer, bei dem jeder Zahn von einer Wicklung umgeben ist, und der eine Lochzahl q = 1/2 besitzt, sowie einen Läufer, auf dem Permanentmagnete mit einer Pollücke in Umfangsrichtung und mit einer Schrägung bezogen auf die axiale Richtung angeordnet sind, auf.

Dreiphasige PM-Synchronmaschinen (permanentmagneterregt) mit Ständern, die Wicklungen um jeden Zahn besitzen und die eine Lochzahl q = 1/2 haben, besitzen Drehmomentenwelligkeiten, die insbesondere durch die 5. und 7. Oberwellen der Ständer - und Läuferfelder hervorgerufen werden. Dabei entspricht die Lochzahl der Anzahl der Ständernuten N1 dividiert durch dreimal die Anzahl der Pole 2p, d.h. q = N1/ (3x2p). Es entsteht also beispielsweise eine Drehmomentenwelligkeit, wenn die 5. Oberwelle des Läuferfelds mit der 5. Oberwelle des Ständerfelds koppelt und die beiden Felder dabei eine andere Drehzahl besitzen als die Läuferdrehzahl.

Wegen einfacherer Fertigungstechnik ist eine große Pollücke zwischen den Magnetpolen sinnvoll. Bei Pollücken zwischen 20 % und 42,9 % der Polteilung $\tau_p$ sind jedoch die Oberwellen und somit auch die dadurch hervorgerufenen Pendeldrehmomente besonders groß. Daher werden bislang kaum Maschinen mit der Lochzahl q = 1/2 gebaut, die Pollücken in diesem Bereich haben.

Hinsichtlich der Drehmomentenwelligkeit wurden bisher in der Regel Maßnahmen getroffen, die die 5. und 7. Oberwelle des Läufers reduzieren bzw. eliminieren. Dies ist beispielsweise durch die gezielte Polbedeckung des Rotors mit Magneten und/oder Schrägung bzw. Staffelung der Magnete möglich.

Aus der Druckschrift WO 2004/109894 A1 ist ein gattungsgemäßer permanentmagneterregter Synchronmotor bekannt. Durch eine Schrägung um eine halbe Nutteilung 0,5 x Tn bzw. durch eine Schrägung um 3/5 x Tn wird eine völlige Auslöschung der fünften Oberwelle des Läuferfelds erreicht. Dabei bezeichnet Tn eine Nutteilung. Bei einer Schrägung von 3/7 x Tn wird die siebte Oberwelle des Läuferfelds ausgelöscht. Die Kombination dieser Schrägung von 60 % einer Nutteilung Tn mit einer Polbedeckung von 85 % führt sowohl zur völligen Dämpfung bzw. Auslöschung der fünften als auch der siebten Oberwellen. Auch die Kombination der Schrägung von 3/7 x Tn mit einer Polbedeckung von ca. 80 % führt sowohl zur völligen Dämpfung bzw. Auslöschung der fünften als auch der siebten Oberwelle.

Die Aufgabe der vorliegenden Erfindung besteht somit darin, die Fertigungstechnik von dreiphasigen PM-Synchronmaschinen mit Lochzahl q = 1/2 bei geringer Gesamtdrehmomentwelligkeit zu vereinfachen und somit auch den Gestaltungsspielraum für derartige Maschinen zu erweitern.

Erfindungsgemäß wird diese Aufgabe gelöst durch eine permanenterregte Synchronmaschine nach Anspruch 1, die für einen Dreiphasen-Betrieb ausgelegt ist, mit einem Ständer, bei dem jeder Zahn von einer Wicklung umgeben ist, und der eine Lochzahl q = 1/2 besitzt, und einem Läufer, auf dem Permanentmagnete mit einer Pollücke in Umfangsrichtung und mit einer Schrägung bezogen auf die axiale Richtung angeordnet sind, wobei die Pollücke und die Schrägung derart dimensioniert sind, dass sich Pendeldrehmomente, die durch die fünfte und siebte Oberwelle jeweils des Ständerfelds und des Läuferfelds hervorgerufen werden, gegenseitig reduzieren. Die Schrägung weist bei axialer Projektion einen Schrägungswinkel in Umfangsrichtung bezogen auf die Polteilung von 40 % bis 57,2 % auf. Um dann eine möglichst weitgehende Kompensation von Pendeldrehmomenten hervorgerufen durch die 5. und 7. Oberwellen zu erzielen, sollte die Pollücke bezogen auf die Polteilung im Bereich von 20 % bis 42,9 % liegen.

Gemäß einer besonders bevorzugten Ausführungsform gilt für das Verhältnis Schrägungswinkel/Polteilung schdpt in Abhängigkeit von dem Verhältnis Pollücke/Polteilung pldpt : schdpt = - 0,75 x pldpt + 72,2 %. Sobald der Schrägungswinkel und die Pollücke diese Funktion genügen, ist eine nahezu vollständige Kompensation der Pendeldrehmomente zu erwarten.

Das Verhältnis Schrägungswinkel/Polteilung schdpt in Abhängigkeit von dem Verhältnis Pollücke/Polteilung pldpt kann aber auch in dem Bereich zwischen - 0,75 x pldpt + 72,2 % und - 0,75 x pldpt + 72,2 % - 10 % liegen. Damit ist ein Toleranzband definiert, in dem sich die Pendeldrehmomente der 5. und 7. Oberwellen größtenteils kompensieren, so dass immer noch eine sehr geringe Drehmomentenwelligkeit, d.h. eine PM-Synchronmaschine hoher Qualität, zu erwarten ist.

In vorteilhafter Weise ist durch diese Synchronmaschine möglich, verhältnismäßig große Pollücken zu verwenden, d.h. die Polbedeckung gering zu halten und dennoch die Drehmomentenwelligkeit möglichst klein zu halten.

Vorzugsweise kompensieren sich die Pendeldrehmomente, die durch die 5. und 7. Oberwelle jeweils des Ständerfelds und des Läuferfelds hervorgerufen werden, im Wesentlichen. Damit wird in nahezu optimaler Weise die Tatsache ausgenutzt, dass die Pendeldrehmomente, die von den 5. Oberwellen hervorgerufen werden, gegenüber denjenigen, die durch die 7. Oberwellen hervorgerufen werden, entgegengesetzt gerichtet sind.

Die Läufergrundpolpaarzahl der Synchronmaschine kann der Ständergrundpolpaarzahl entsprechen.

Darüber hinaus können die Permanentmagnete für die Schrägung in Umfangsrichtung gestaffelt sein. Hierdurch lässt sich kostengünstig eine Schrägung der Permanentmagnete auf dem Läufer erreichen.

Die vorliegende Erfindung wird nun an Hand der beigefügten Zeichnungen näher erläutert, in den zeigen:

FIG 1    einen Querschnitt durch eine PM-Synchronmaschine mit zwölfpoligem Ständer und achtpoligem Läufer;

FIG 2    einen vergrößerten Ausschnitt von FIG 1;

FIG 3    eine Draufsicht auf einen erfindungsgemäßen sechspoligen Läufer;

FIG 4    eine Stirnseitenansicht des Läufers von FIG 3

FIG 5    ein Diagramm zur Darstellung eines erweiterten Nutzbereichs einer PM-Synchronmaschine in Abhängigkeit von Schrägung und Pollücke.

Die nachfolgenden näher geschilderten Ausführungsbeispiele stellen bevorzugte Ausführungsformen der vorliegenden Erfindung dar.

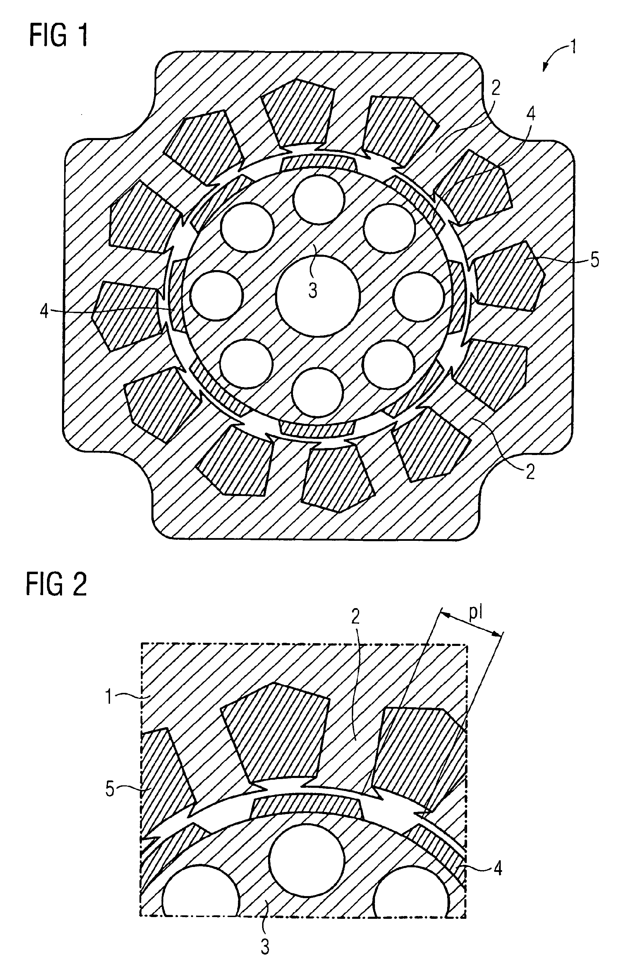

In FIG 1 ist eine PM-Synchronmaschine im Querschnitt wiedergegeben. Der Ständer 1 besitzt zwölf Pole 2. Der Läufer 3 im Inneren des Ständers 1 besitzt acht Pole, die in dieser Ansicht durch acht Permanentmagnete 4 repräsentiert sind.

FIG 2 zeigt einen vergrößerten Ausschnitt aus FIG 1. Auch hier sind wieder der Ständer 1 mit seinen Zähnen 2 und der Läufer 3 mit seinen Permanentmagneten 4 zu erkennen. Die Zähne 2 des Ständers 1 sind mit nicht näher dargestellten Wicklungen 5 bewickelt. Insbesondere ist der FIG 2 jedoch auch eine Pollücke pl zu entnehmen. Die Pollücke lässt sich durch einen Winkel in Umfangsrichtung quantifizieren.

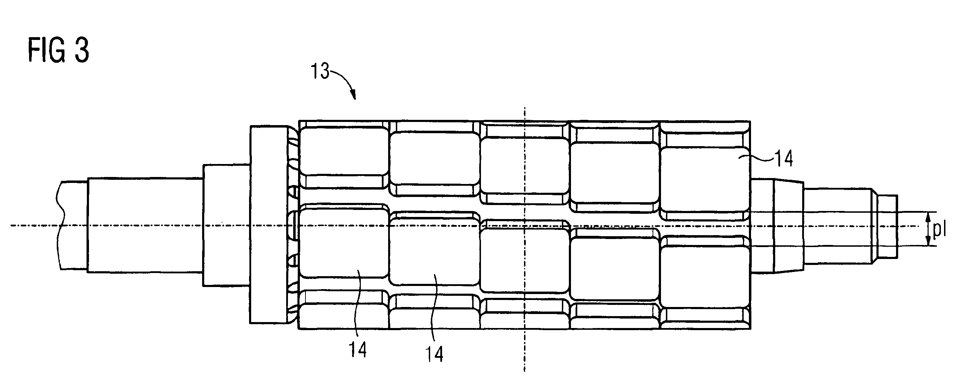

Erfindungsgemäß werden zur Reduzierung der Drehmomentenwelligkeit neben der speziellen Dimensionierung der Pollücken auch eine bestimmte Schrägung bzw. Staffelung der Magnete vorgenommen. Eine derartige Staffelung der Magnete ist in FIG 3 anhand eines sechspoligen Rotors dargestellt. Die vorliegende Erfindung ist also nicht auf achtpolige Rotoren gemäß den FIG 1 und 2 beschränkt, sondern lässt sich auf beliebig polige Rotoren anwenden.

Die Längsseitenansicht des Rotors 13 von FIG 3 zeigt mehrere Einzelmagnete 14, die zu schrägen Magnetreihen in axialer Richtung angeordnet sind. Die Magnetreihen besitzen zueinander einen Abstand, der der Pollücke pl entspricht. Im vorliegenden Fall beträgt die Pollücke pl etwa 30 % der Polteilung $\tau_p$. Letztere stellt den Winkel zwischen zwei in Umfangsrichtung benachbarten Permanentmagneten 17 dar. Die Pollücke pl entspricht dem Winkelmaß in Umfangsrichtung, das durch den Abstand zweier in Umfangsrichtung benachbarter Permanentmagnete 14 gegeben ist.

In FIG 3 ist weiterhin zu erkennen, dass zwei in axialer Richtung benachbarte Permanentmagnete 14 in Umfangsrichtung um einen Staffelwinkel $\alpha$ versetzt sind. In dem vorliegenden Beispiel bei einer Anzahl von fünf Permanentmagneten entlang der Achse des Rotors 13 ergibt sich bei einem Staffelwinkel $\alpha$ = 5,4° ein Schrägungswinkel von 27°. Sind beispielsweise acht Permanentmagnete 14 entlang der Achse des Rotors 13 angeordnet, so ergäbe sich beispielsweise bei einem Staffelwinkel $\alpha$ = 3,25° ein Schrägungswinkel von 26°.

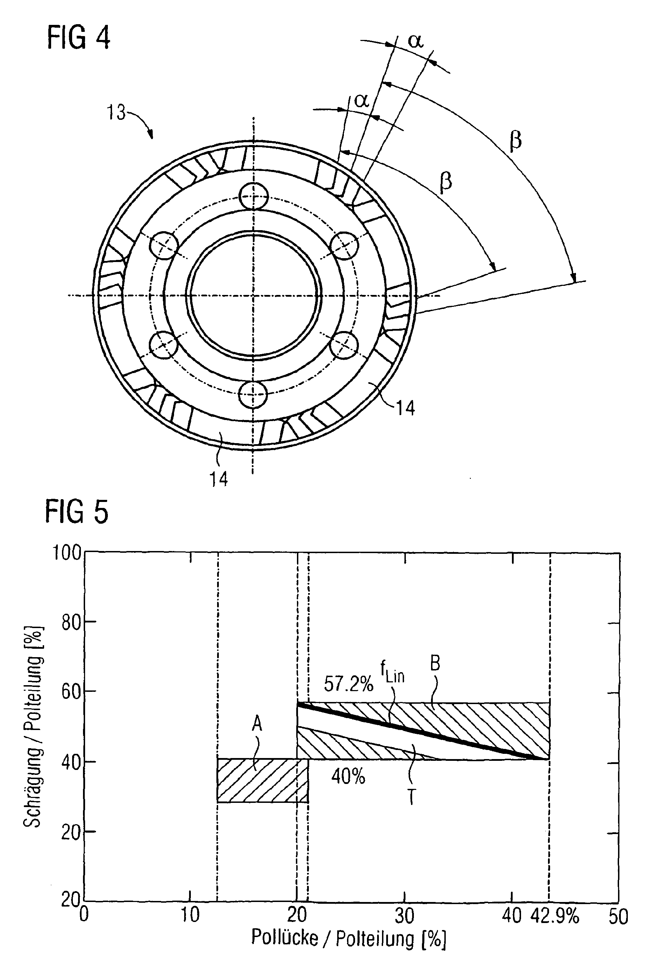

In FIG 4 ist der Rotor von FIG 3 in der Stirnseitenansicht dargestellt. In dieser Ansicht sind die Staffelungen der Permanentmagnete 14 in ihren Winkelmaßen gut zu erkennen. In dieser Ansicht ist nämlich die Schrägung bzw. Staffelung der Permanentmagnete 14 in axialer Richtung auf eine Ebene quer zur Achse projiziert. Somit ist der Staffelwinkel $\alpha$ zwischen zwei axialbenachbarten Permanentmagneten 14 erkennbar. Außerdem kennzeichnet der Winkel $\beta$ die Polteilung $\tau_p$.

Im Stand der Technik wurden Schrägungen und Pollücken so dimensioniert, dass die Oberwellen und insbesondere die 5. und die 7. Oberwelle des Läufers möglichst gering sind. Aufgetragen über einem zweidimensionalem Diagramm, bei dem die Ordinate die Schrägung bezogen auf die Polteilung und die Abszisse die Pollücke bezogen auf die Polteilung darstellt, konnte daher nur der Bereich A genutzt werden. In diesem Bereich ist die relative Pollücke verhältnismäßig klein und liegt im Wesentlichen unter 20 %.

Die vorliegende Erfindung zielt jedoch dahin, die einzelnen Feldwellen nicht zu eliminieren, sondern durch geeignete Maßnahmen die großen Oberwellen des Rotorfeldes zur gegenseitigen Reduzierung der einzelnen Pendeldrehmomente zu nutzen. Dazu ist es das Ziel, dass die Werte von Pendeldrehmoment $M_5$ der 5. Oberwellen und Pendeldrehmoment $M_7$ der 7. Oberwellen möglichst gleiche Amplituden, aber gegensätzliche Richtungen (Phasenverschiebung 180°) besitzen. Die Pendeldrehmomente durch die 5. Oberwellen vom Ständerfeld und Läuferfeld haben die gleiche Frequenz wie die Pendelmomente, die durch die 7. Oberwellen hervorgerufen werden. Die Frequenz entspricht der sechsfachen der elektrischen Grundfrequenz.

Der Ständer der hier dargestellten PM-Synchronmaschine hat generell N1 Nuten und Zähne. Um jeden Zahn ist eine Spule gewickelt. Die Grundpolpaarzahl des Wicklungssystems ist $p_{GW}$ und die Lochzahl beträgt q = 1/2. Der Rotor 3 bzw. 13 wird dazu mit Permanentmagneten 4 bzw. 14 auf der Rotoroberfläche bestückt. Die Permanentmagnete 4, 14 werden so magnetisiert, dass die Rotorgrundpolpaarzahl gleich der Ständergrundpolpaarzahl ist, d.h. $p_{GR} = p_{GW}$. Zwischen den einzelnen Magnetpolen wird nun aber eine Pollücke gelassen, die zwischen 20 % und 42,9 % einer Polteilung beträgt. Abhängig von der Breite der Pollücke werden die Permanentmagnete 4, 14 auf dem Rotor 3, 13 gestaffelt oder geschrägt.

In FIG 5 ist ein Bereich B eingezeichnet, der für den genannten Pollückenbereich eine sehr geringe Drehmomentenwelligkeit bringt. Demnach ist eine relative Schrägung in diesem Bereich zwischen 40 % und 57,2 % zu wählen. In diesem Bereich B subtrahieren sich entsprechend dem erfindungsgemäßen Grundgedanken die Pendeldrehmomente der 5. und 7. Oberwellen. Die Pendeldrehmomente besitzen hier also im Wesentlichen gleiche Werte und neutralisieren sich, da sie entgegengesetzt gerichtet sind.

Die beiden Pendeldrehmomente neutralisieren sich vollständig auf einer speziellen Kurve durch den Bereich B. Die Funktion, die die relative Schrägung schdpt (Schrägung/Polteilung) in Abhängigkeit von der relativen Pollücke pldpt (Pollücke/Polteilung) angibt, bei der die Kompensation der Pendeldrehmomente theoretisch vollkommen ist, lässt sich durch folgende lineare Funktion annähern:

$$\texttt{schdpt = - 0,75 x pldpt + 72,2 \%}$$

Diese lineare Funktion ist in FIG 5 innerhalb des Bereichs B durch die Gerade $f_{lin}$ gekennzeichnet. Weiterhin kann in dem Bereich B ein Toleranzband angegeben werden, in dem die Drehmomentenwelligkeit noch hinreichend gut ist, da sich die entsprechenden Pendeldrehmomente weitestgehend kompensieren. Dieses Toleranzband T ist in dem Bereich B nach oben hin durch die Funktion $f_{lin}$ begrenzt und erreicht 10 %-Punkte diese Funktion $f_{lin}$. D.h. das Toleranzband T ist nach unten hin durch die Gerade - 0,75 x pldpt + 72,2 % - 10 % begrenzt. Der Rotor gemäß dem Beispiel von FIG 3 liegt in dem oben definierten Toleranzband T. Seine relative Pollücke pldpt liegt nämlich bei 30 % und sein relativer Schrägungswinkel, der durch die Staffelung approximiert ist, liegt bei 45 % = 27°/60°. Eine Synchronmaschine mit dem Rotor von FIG 3 wird demnach eine verhältnismäßig kleine Drehmomentenwelligkeit aufweisen.

Insgesamt lässt sich also feststellen, dass durch die erfindungsgemäße gegenseitige Neutralisation von zwei gleichgroßen Pendeldrehmomenten eine geringe Gesamtdrehmomentenwelligkeit erreicht wird. Damit wird das konstruktiv sinnvolle Feld für die Gestaltung des genannten Maschinentyps erweitert. Demnach sind auch Rotoren möglich, die trotz großer Pollücken (z.B. pldpt = 30 %) eine geringe Drehmomentenwelligkeit erzeugen. Ein weiterer Vorteil dieser Rotoren mit großen Pollücken besteht darin, dass sie weniger Magnetmaterial benötigen und sich auch einfacher magnetisieren lassen.

**Patentansprüche**

1. Permanentmagneterregte Synchronmaschine, die für einen Dreiphasen-Betrieb ausgelegt ist, mit

   - einem Ständer (1), bei dem jeder Zahn von einer Wicklung (5) umgeben ist, und der eine Lochzahl q = 1/2 besitzt, und
   - einem Läufer (3, 13), auf dem Permanentmagnete (4, 14) mit einer Pollücke (pl) in Umfangsrichtung und mit einer Schrägung bezogen auf die axiale Richtung angeordnet sind,

   wobei

   - die Pollücke (pl) und die Schrägung derart dimensioniert sind, dass sich Pendeldrehmomente, die durch die fünfte und siebte Oberwelle jeweils des Ständerfelds und des Läuferfelds hervorgerufen werden, gegenseitig reduzieren,
   - die Schrägung bei axialer Projektion einen Schrägungswinkel in Umfangsrichtung bezogen auf die Polteilung von 40 % bis 57,2 % aufweist,
   - die Pollücke (pl) bezogen auf die Polteilung im Bereich von 20 % bis 42,9 % liegt,

   **wobei**

   - für das Verhältnis Schrägungswinkel/Polteilung schdpt in Abhängigkeit von dem Verhältnis Pollücke/Polteilung plbpt gilt: schdpt = -0,75 x pldpt + 72,2 %, oder
   - das Verhältnis Schrägungswinkel/Polteilung schdpt in Abhängigkeit von dem Verhältnis Pollücke/Polteilung pldpt in dem Bereich zwischen **-0,75** x pldpt + 72,2 % bis **-0,75** x pldpt + 72 % - 10 % liegt.

2. Synchronmaschine nach Anspruch 1, wobei die Pendeldrehmomente, die durch die fünfte und siebte Oberwelle jeweils des Ständerfelds und des Läuferfelds hervorgerufen werden, sich im Wesentlichen kompensieren.

3. Synchronmaschine nach Anspruch 1 oder 2, wobei die Läufergrundpolpaarzahl der Ständergrundpolpaarzahl entspricht.

4. Synchronmaschine nach einem der vorhergehenden Ansprüche, wobei die Permanentmagnete (4,14) für die Schrägung in Umfangsrichtung gestaffelt sind.

**Claims**

1. Permanent-magnet synchronous machine which is designed for three-phase operation, having

    - a stator (1) in which each tooth is surrounded by a winding (5) and which has a number of holes q = 1/2, and
    - a rotor (3, 13), on which permanent magnets (4, 14) are arranged with a pole gap (p1) in the circumferential direction and with a skew with respect to the axial direction,

    wherein

    - the pole gap (p1) and the skew are designed such that oscillating torques which are caused by the fifth and seventh harmonics in each case of the stator field and of the rotor field are mutually reduced,
    - the skew has a skew angle, on an axial projection, in the circumferential direction with respect to the pole pitch of 40% to 57.2%,
    - the pole gap (p1) is in the range from 20% to 42.9% with respect to the pole pitch,

    wherein

    - the ratio of the skew angle/pole pitch schdpt is, as a function of the ratio of the pole gap/pole pitch plbpt: schdpt = -0.75 x pldpt + 72.2%, or
    - the ratio of the skew angle/pole pitch schdpt is, as a function of the ratio of the pole gap/pole pitch pldpt, in the range between -0.75 x pldpt + 72.2% to -0.75 x pldpt + 72% - 10%.

2. Synchronous machine according to Claim 1, wherein the oscillating torques which are caused by the fifth and seventh harmonics in each case of the stator field and of the rotor field essentially compensate for one another.

3. Synchronous machine according to Claim 1 or 2, wherein the basic number of rotor pole pairs corresponds to the basic number of stator pole pairs.

4. Synchronous machine according to one of the preceding claims, wherein the permanent magnets (4, 14) are staggered for the skew in the circumferential direction.

**Revendications**

1. Machine synchrone à excitation permanente, qui est conçue pour un fonctionnement suivant trois phases, comprenant

    - un stator ( 1 ), dans lequel chaque dent est entourée d'un enroulement ( 5 ) et qui a un nombre de trous q = 1/2, et
    - un rotor ( 3, 13 ), sur lequel sont montés des aimants ( 4, 14 ) permanents ayant un intervalle ( p1 ) interpolaire dans la direction périphérique et une inclinaison rapportée à la direction axiale,

    dans laquelle

    - l'intervalle ( p1 ) interpolaire et l'inclinaison ont des dimensions telles que des couples de rotation d'oscillation, qui sont provoqués par le cinquième et le septième harmoniques, respectivement du champ statorique et du champ rotorique sont réduits mutuellement,
    - l'inclinaison a, en projection axiale, un angle d'inclinaison dans la direction périphérique rapportée au pas polaire de 40 % à 57,2 %,
    - l'intervalle ( p1 ) interpolaire rapporté au pas polaire va de 20 % à 42,9 %,

    dans laquelle

    - pour le rapport angle d'inclinaison/pas polaire schdpt en fonction du rapport intervalle interpolaire/pas polaire plbpt, on a : schdpt = -0,75 x pldpt + 72,2 %, ou

- le rapport angle d'inclinaison/pas polaire schdpt en fonction du rapport intervalle interpolaire/pas polaire pldpt va de -0,75 x pldpt + 72,2 % à -0,75 x pldpt + 72 % - 10 %.

2. Machine synchrone suivant la revendication 1, dans laquelle les couples de rotation d'oscillation qui sont provoqués par les cinquième et septième harmoniques, respectivement du champ statorique et du champ rotorique, se compensent sensiblement.

3. Machine synchrone suivant la revendication 1 ou 2, dans laquelle le nombre de paire de pôles de base rotoriques correspond au nombre de paire de pôles de base statoriques.

4. Machine synchrone suivant l'une des revendications précédentes, dans laquelle les aimants ( 4, 14 ) permanents sont, pour l'inclinaison, étagés dans la direction périphérique.

FIG 1

FIG 2

FIG 3

13

14

14    14

pl

EP 2 139 100 B1

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004109894 A1